# EUROPEAN PATENT SPECIFICATION

(11) **EP 4 256 354 B1**
(45) Date of publication and mention of the grant of the patent: **17.04.2024**
(21) Application number: 21810699.5
(22) Date of filing: 02.11.2021
(51) Int. Cl.: G05B 23/02

(54) **SAFETY MECHANISMS FOR ARTIFICIAL INTELLIGENCE UNITS USED IN SAFETY CRITICAL APPLICATIONS**
SICHERHEITSMECHANISMEN FÜR KÜNSTLICHE INTELLIGENZEINHEITEN ZUR VERWENDUNG IN SICHERHEITSKRITISCHEN ANWENDUNGEN
MÉCANISMES DE SÉCURITÉ POUR UNITÉS D'INTELLIGENCE ARTIFICIELLE UTILISÉES DANS DES APPLICATIONS CRITIQUES POUR LA SÉCURITÉ

(30) Priority: 07.12.2020 GB 202019217
(43) Date of publication of application: 11.10.2023
(73) Proprietor: Antobot Ltd, Cambridge, Cambridgeshire CB1 1AH (GB)
(72) Inventor: WU, Hao, Chelmsford Essex CM1 1SQ (GB); LU, Ke, Chelmsford Essex CM1 1SQ (GB); FREER, Daniel, Chelmsford Essex CM1 1SQ (GB); MAGI, Mart, Chelmsford Essex CM1 1SQ (GB); AN, Hao, Chelmsford Essex CM1 1SQ (GB)
(74) Representative: ip21 Ltd
(86) International application number: PCT/GB2021/052831
(87) International publication number: WO 2022/123197

(56) References cited:
- EP-A1- 2 037 340
- DE-A1-102008 034 150
- US-A1- 2004 172 580
- US-A1- 2015 178 617

## Description

### Technical field

Aspects of the present invention generally relate to safety monitoring of artificial intelligence (AI) processing units. In particular, aspects of the present invention relate to methods and systems using a safety unit to perform safety monitoring on AI processing units with low safety levels.

### Background

Functional safety is of great significance to electronic, electrical, and programmable electronic safety control systems. Functional safety focuses on avoiding unacceptable risks due to system functional failures. Internationally, the IEC 61508, IEC 61511 and other series of standards issued by the International Electrotechnical Commission (IEC) have gradually become basic functional safety standards now widely recognized by various countries and industries globally. Other industries are gradually forming national industry standards with reference to basic standards.

When designing the functional safety of a system, an important step in the early stages is to conduct hazard analysis and risk assessment of the system, identify the hazards of the system and evaluate the risk level of the hazards. IEC 61508 divides the safety integrity level (Safety Integration Level, SIL) into 4 levels, the 4th level representing the highest integrity. In order to meet the requirements, a number of safety mechanisms are typically integrated inside a chip, including a safety mechanism of the internal module of the chip and a safety mechanism at the system level. When a fault occurs and is detected by the corresponding safety mechanism, these safety mechanisms need to report the occurrence of the fault in time, so that the system can respond to the fault according to the type and degree of the fault, so as to avoid hidden faults or a function failure directly caused by the fault.

EP2037340 discloses the monitoring of an processing unit by a safety unit.

DE1 02008034150 A1 discloses the monitoring of a processing unit by another processing unit.

Over recent years, artificial intelligence (AI) technology has gradually become a focus of industry, being widely used in robotics, economic and political decision-making systems, and control systems, amongst others. The core hardware in AI technology may include a wide variety of chips. However, the current functional safety standards lack consideration of AI technology, and the design of functional safety standards does not consider the applicability of AI and other technologies.

Aspects of the present invention are aimed at addressing the above safety problems, amongst others.

### Summary

The present invention provides methods and systems to monitor an AI processing unit such as an AI computing chip and discover computing abnormalities in time, thereby ensuring system safety.

In a broad independent aspect, there is provided a method according to claim 1.

Rather than simply communicating values between the various parts of the system, the AI processing unit is sent questions to work out answers for example via numerical or logical operations. In addition, the heartbeat signal representing the physical timeclock of the AI processing unit is checked for example to determine the time period between a falling and rising edge of the physical signal which may be predefined at a fixed value (e.g. 10 ms).

Accordingly, if the answer (represented by the second signal) is correct, the AI processing unit is considered to be working normally. Otherwise, it is regarded as an abnormal system. The safety unit determines whether the timing of sending and answering the question (posed by the first signal) is correct. This timing is realized by monitoring the heartbeat signal. Behaviours that violate the timing are also regarded as system abnormalities. If the system is abnormal, the AI processing unit may be reset or the power supply of the AI processing unit may be cut off.

The first signal represents a question to the AI processing unit, wherein the question is one or more from the group of:
a task identifier, Task_id corresponding to a task of the AI processing unit;
an operation corresponding to the question;
an operand of an operation corresponding to the question;
the number of times, live_count, a second signal is transmitted in the response to a first signal, wherein the method steps are repeated; and
a data check code, such as Cyclic Redundancy Check (CRC).

Advantageously, multiple tasks in the AI processing unit may be monitored simultaneously.

Determining, by the AI processing unit, a second signal comprises: providing a software module in the AI processing unit for storing the first signal in a question storage area of the AI processing unit and reading the second signal, the second signal being stored in an answer storage area of the AI processing unit, and for sending the second signal to the safety unit. For example, a checkpoint may be set for generating answers in the TASK that needs to be monitored in the AI processing unit. It will read the questions from the pre-set question area and write the answers into a pre-set answer area of the AI processing unit.

The second signal represents an answer to a question comprised in the first signal, wherein the answer is one or more from the group of:
a task identifier corresponding to a task of the AI processing unit answering the question;
a calculation result;
the number of times, live_count, a second signal is transmitted in the response to a first signal, wherein the method steps are repeated;
a time stamp of the time when the second signal is generated;
a data check code, such as Cyclic Redundancy Check (CRC).

In a dependent aspect, the step of determining, by the safety unit, whether the second signal is correct and whether the time sequence is correct comprises the steps of:
providing a software module of the AI processing unit to control the heartbeat signal, the software module being adapted to send a falling edge signal to the safety unit, the falling edge indicating that the AI processing unit has prepared the second signal in response to the first signal and can receive a next first signal,
wherein, after the falling edge is generated for a predetermined period of time, the AI processing unit generates a rising edge of the heartbeat signal;
wherein, after detecting the falling edge received from by the software module, the safety unit sends the next first signal to the AI processing unit and reads the previous second signal; and
determining, by the safety unit, a time period between the falling edge and the rising edge of the heartbeat signal to verify that a clock of the AI processing unit is correct.

In a dependent aspect, determining whether the second signal is correct and whether the time sequence is correct comprises determining one or more from the group of:
whether the Task_id and live_count correspond to each other;
whether the calculated answer of the second signal in response to the first signal is correct,
whether the data check code is correct;
whether the timing of the heartbeat signal is correct;
whether the time interval between the rising edge and the next falling edge is within a certain predefined time period.

In a second, broad independent aspect, there is provided a system according to claim 3.

To overcome the deficiencies of the prior art AI systems in relation to functional safety in applications, aspects of the present invention use a safety monitoring unit, referred to as a 'safety unit' or 'safety chip'. This may be a safety monitoring unit composed of a higher safety level single-chip microcomputer, to perform a safety monitor on an artificial intelligence computing unit, such as a 'system on a chip', SOC or a field-programmable gate array, FPGA for example.

The monitoring function includes the following:
1. Communication between the safety monitoring unit and the AI processing unit (also referred to as an AI unit, AI calculation unit, or AI computing unit).
2. A 'heartbeat' signal used to indicate the operating status of the AI processing unit. It will be understood that the heartbeat or heartbeat signal represents a periodic signal indicative of normal operation of the processing unit, which may also be used to synchronise it with other parts of the system (i.e. the AI processing unit clock). The heartbeat signal may also be referred to as a "pulse signal", or "logic level signal".
3. A signal used to safely shut down the AI processing unit, such as a reset signal or a power control signal.

The safety monitoring unit sends the question to the AI processing unit, the AI processing unit feeds back the calculation result and the heartbeat signal corresponding to the question to the safety chip, and the safety unit verifies the answer. If the answer is correct, the AI processing unit is working normally. Otherwise, it is considered that the AI processing unit is not working normally, this being regarded as a psystem abnormality. Furthermore, the sending and answering of questions need to follow a certain time sequence. Advantageously, this sequence is achieved by monitoring the heartbeat signal. Behaviours that violate the sequence are also regarded as system abnormalities. If the system is abnormal, the AI processing unit is reset or the power supply of the AI processing unit is cut off.

In this manner, aspects of the invention can be used to effectively monitor whether the AI processing unit is operating normally and take reasonable fault response measures in good time. This increases safety and robustness of the overall system.

### Brief Description of the Drawings

Exemplary embodiments of the invention will now be described in reference to the accompanying drawings, in which:
Fig.1 shows a data flowchart of a method for safety monitoring.
Fig. 2 shows a detailed data flowchart for step S2 in Fig.1.
Fig. 3 is a schematic diagram of a safety monitoring system.
Fig. 4 schematically illustrates an example of a 'heartbeat' signal.

### Detailed Description

The following examples are used to illustrate the implementation of the present invention.

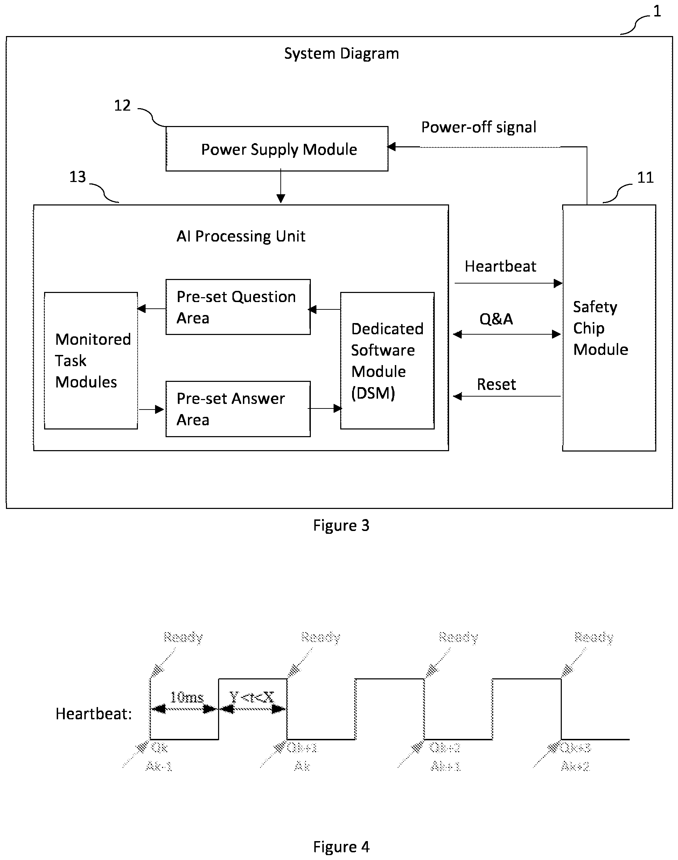

Turning first to Fig. 3, an example safety monitoring system 1 is illustrated schematically. The system 1 for safety monitoring of an AI processing unit includes: a safety chip (module) 11, a power supply (module) 12, and an AI processing unit (module) 13, i.e. a processor 13.

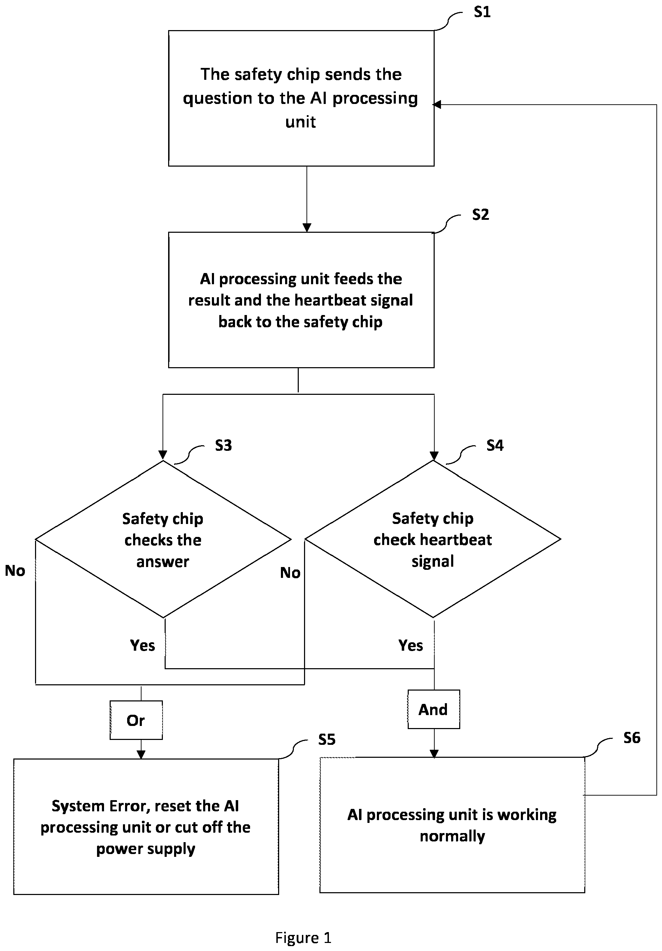

Fig. 1 shows a schematic diagram of a method used to monitor the safety of the AI processing unit 13. The method includes the following steps:

### Step S1

The safety chip 11 sends a question to the AI processing unit 13. In this example, questions sent to the AI processing unit 13 include the following:
(1) Task_id corresponding to the monitored TASK. The AI processing unit may carry out a number of tasks simultaneously, identifiable by the Task_id. These tasks and Task_ids are pre-known by both AI processing unit and the safety chip. The tasks are running and monitored by the AI processing unit.
(2) The operation corresponding to the question;
(3) The operand of the operation corresponding to the question;
(4) live_count;
(5) Data check code, such as Cyclic Redundancy Check (CRC).

In this example, the Task_id may represent the serial number corresponding to each task in the AI processing unit 13, live_count represents the number of questions and answers (Q&A) conducted, and 1 is added for each question and answer (Q&A).

### Step S2

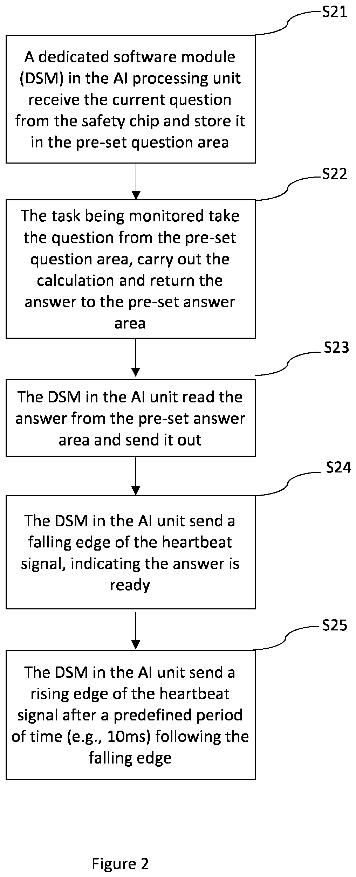

The AI processing unit 13 reads and calculates the questions received from the safety chip 11, and then feeds back the results and the heartbeat signal to the safety chip 11. Fig. 2 shows a detailed flow chart of an example step S2. As shown in Fig. 2, at step S2, the AI processing unit 13 reads and calculates the question from the safety chip 11, and then feeds the result back to the safety chip 11. More specifically, step S2 comprises the following steps:
S21: A dedicated software module (DSM) in the AI processing unit 13 stores the question in the pre-set question area.
S22. The checkpoint used to generate the answer in the TASK that needs to be monitored in the AI processing unit 13 reads the question from the pre-set question area, the monitored TASK calculates the answer and write the answer into the pre-set answer area, and the AI processing unit 13 feedbacks the answers to the safety chip 11. In this example, the answer include:
   (1) Task_id corresponding to the TASK answering the question;
   (2) Calculation answer;
   (3) live_count;
   (4) The time stamp of the time when the answer was generated;
   (5) Data check code, such as CRC.
S23. The DSM in the AI processing unit 13 reads the answer from the pre-set answer area and sends it to the safety chip 11.
S24. The DSM in the AI processing unit 13 sends a falling edge of the heartbeat signal, indicating the answer is ready. After detecting the falling edge generated by the AI processing unit, the safety chip immediately reads the answer from the previous question and sends the next question to the AI processing unit 13.
S25. The DSM in the AI processing unit 13 sends a rising edge of the heartbeat signal after a predefined period of time (e.g. 10ms) following the falling edge to verify the time sequence.

S3. The safety chip 11 checks the information in the question and answer (Q&A).

Specific inspection contents in this example include:
(1) Whether task_id and live_count correspond correctly;
(2) Whether the answer of the operation is correct;
(3) Whether the CRC check is correct.

S4. The safety chip 11 verifies the heartbeat signal and measures the time between the rising edges and the falling edges to verify whether the clock of the Al processing unit 13 is correct. With reference to Fig.4, if the interval between the falling edge and the rising edge does not equal to the predefined value (e.g. 10ms in Fig. 4), the system 1 is abnormal, otherwise, it is normal. In addition, if the time interval between the rising edge and the next falling edge is within certain predefined values (Y<t<X, here X and Y are predefined), the question and answer does not time out, and the system 1 is assessed to be working normally. If the time interval between the rising edge and the next falling edge exceeds the predefined values, the system 1 is assessed to be abnormal.

S5. If it is determined that the system 1 is abnormal after S3 and S4, reset the AI processing unit 13 or cut off the power supply 12 of the AI processing unit 13.

S6. If it is determined that the AI processing unit 13 is working normally after S3 and S4, keep monitoring and continue to the next question and answer (Q&A).

## Claims

1. A method for safety monitoring of an artificial intelligence, AI, processing unit (13) for simultaneously running a plurality of tasks and for simultaneously monitoring a plurality of tasks, the method comprising the steps of:
providing a safety unit (11) for sending a first signal representing a question to the AI processing unit (13) and
determining, by the AI processing unit (13), a second signal in response to the first signal, wherein the second signal represents an answer to the question;
transmitting, by the AI processing unit (13) to the safety unit (11) the second signal and a heartbeat signal of the AI processing unit (13), the heartbeat signal representing a periodic signal indicative of normal operation of the AI processing unit (13);
wherein the question comprises a task identifier, Task_id, corresponding to a task of the AI processing unit (13) from the plurality of tasks that needs to be monitored and the answer comprises the task identifier corresponding to the task of the AI processing unit (13) answering the question and the number of times, live_count, the second signal is transmitted in response to the first signal when the method steps are repeated; and
determining, by the safety unit (11), whether the second signal is correct, wherein determining, by the AI processing unit (13), a second signal comprises: providing a software module in the AI processing unit (13) for storing the first signal in a question storage area of the AI processing unit (13) and reading the second signal, the second signal being stored in an answer storage area of the AI processing unit (13), and for sending the second signal to the safety unit (11), and
further determining, by the safety unit (11) whether the heartbeat signal is correct, comprising checking that a time period of the heartbeat corresponds to a predetermined value and further checking that a sequence of the first and second signals follows a predetermined time sequence;
wherein Task id is checked to correspond to said task that needs to be monitored, comprising reading the question from the question storage area and writing the answer in the answer storage area;
wherein if either the second signal or the heartbeat signal is incorrect, the method further comprises the step of sending by the safety unit (11) a signal to shut down the AI processing unit (13) either by resetting the AI processing unit (13) or shutting off a power supply (12) of the AI processing unit (13).

2. A method according to any preceding claim, wherein the step of determining, by the safety unit (11) whether the heartbeat signal is correct, further comprises the steps of:
providing a software module of the AI processing unit (13) to control the heartbeat signal, the software module being adapted to send a falling edge signal to the safety unit (11), the falling edge indicating that the AI processing unit (13) has prepared the second signal in response to the first signal and can receive the next first signal,
wherein, after the falling edge is generated for a predetermined period of time, the AI processing unit (13) generates a rising edge of the heartbeat signal;
wherein, after detecting the falling edge received from by the software module, the safety unit (11) sends the next first signal to the AI processing unit (13) and reads the previous second signal; and
determining, by the safety unit (11), a time period between the falling edge and the rising edge of the heartbeat signal to verify that a clock of the AI processing unit (13) is correct.

3. A system (1) for safety monitoring of an artificial intelligence, AI, processing unit (13) for simultaneously running a plurality of tasks and for simultaneously monitoring a plurality of tasks, the system comprising:
a safety unit (11) for sending a first signal to the AI processing unit (13);
the AI processing unit (13) being adapted to determine a second signal in response to the first signal, wherein the second signal represents an answer to the question, and to transmit to the safety unit (11) the second signal and a heartbeat signal of the AI processing unit (13), the heartbeat signal representing a periodic signal indicative of normal operation of the AI processing unit (13);
wherein the question comprises a task identifier, Task_id, corresponding to a task of the AI processing unit (13) from the plurality of tasks that needs to be monitored and the answer comprises the task identifier corresponding to the task of the AI processing unit (13) answering the question and the number of times, live_count, the second signal is transmitted in response to the first signal when the method steps are repeated;
the safety unit (11) being adapted to determine whether the second signal is correct;
wherein the AI processing unit (13) further comprises a software module in the AI processing unit (13) for storing the first signal in a question storage area of the AI processing unit (13) and reading the second signal, the second signal being stored in an answer storage area of the AI processing unit (13), and for sending the second signal to the safety unit (11),
the safety unit (11) being further adapted to determine whether the heartbeat signal is correct, comprising checking that a time period of the heartbeat corresponds to a predetermined value and further checking that a sequence of the first and second signals follows a predetermined time sequence;
wherein Task id is checked to correspond to said task that needs to be monitored, comprising reading the question from the question storage area and writing the answer in the answer storage area;
the system further comprising a power supply (12) for powering the AI processing unit (13), wherein the safety unit (11) is further adapted to send a signal to shut down the AI processing unit (13) either by resetting the AI processing unit (13) or shutting off the power supply (12).

## Patentansprüche

1. Verfahren zur Sicherheitsüberwachung einer Verarbeitungseinheit (13) mit künstlicher Intelligenz (KI) zum gleichzeitigen Ausführen einer Vielzahl von Aufgaben und zum gleichzeitigen Überwachen einer Vielzahl von Aufgaben, wobei das Verfahren die folgenden Schritte umfasst:
Bereitstellen einer Sicherheitseinheit (11) zum Senden eines ersten Signals, das eine Frage an die KI-Verarbeitungseinheit (13) darstellt und
Bestimmen eines zweiten Signals durch die KI-Verarbeitungseinheit (13) in Reaktion auf das erste Signal, wobei das zweite Signal eine Antwort auf die Frage darstellt;
Übertragen des zweiten Signals und eines Herzschlagsignals der KI-Verarbeitungseinheit (13) durch die KI-Verarbeitungseinheit (13) an die Sicherheitseinheit (11), wobei das Herzschlagsignal ein periodisches Signal darstellt, das den normalen Betrieb der KI-Verarbeitungseinheit (13) anzeigt;
wobei die Frage eine Aufgabenkennung, Task_id, umfasst, die einer Aufgabe der KI-Verarbeitungseinheit (13) aus der Vielzahl von Aufgaben entspricht, die überwacht werden muss, und die Antwort die Beantwortung der Frage durch die der Aufgabe der KI-Verarbeitungseinheit (13) entsprechende Aufgabenkennung und die Anzahl der Übertragungen, live_count, des zweiten Signals als Antwort auf das erste Signal bei Wiederholung der Verfahrensschritte umfasst;
und
Bestimmen, durch die Sicherheitseinheit (11), ob das zweite Signal korrekt ist, wobei das Bestimmen eines zweiten Signals durch die KI-Verarbeitungseinheit (13) Folgendes umfasst:
Bereitstellen eines Softwaremoduls in der KI-Verarbeitungseinheit (13) zum Speichern des ersten Signals in einer Fragespeicherbereich der KI-Verarbeitungseinheit (13) und Lesen des zweiten Signals, wobei das zweite Signal in einem Antwortspeicherbereich der KI-Verarbeitungseinheit (13) gespeichert wird, und zum Senden des zweiten Signals an die Sicherheitseinheit (11), und
weiteres Bestimmen, durch die Sicherheitseinheit (11), ob das Herzschlagsignal korrekt ist, umfassend das Prüfen, dass eine Zeitperiode des Herzschlags einem vorbestimmten Wert entspricht, und weiter das Prüfen, dass eine Sequenz des ersten und zweiten Signals einer vorbestimmten Zeitsequenz folgt;
wobei geprüft wird, dass Task_id der zu überwachenden Aufgabe entspricht, was das Lesen der Frage aus dem Fragespeicherbereich und das Schreiben der Antwort in den Antwortspeicherbereich umfasst;
wobei das Verfahren, wenn entweder das zweite Signal oder das Herzschlagsignal nicht korrekt ist, ferner den Schritt des Sendens eines Signals durch die Sicherheitseinheit (11) zum Abschalten der KI-Verarbeitungseinheit (13) umfasst, entweder durch Zurücksetzen der KI Verarbeitungseinheit (13) oder durch Abschalten einer Stromversorgung (12) der KI-Verarbeitungseinheit (13).

2. Verfahren nach einem der vorhergehenden Ansprüche, wobei der Schritt des Bestimmens durch die Sicherheitseinheit (11), ob das Herzschlagsignal korrekt ist, ferner die folgenden Schritte umfasst:
Bereitstellen eines Softwaremoduls der KI-Verarbeitungseinheit (13), um das Herzschlagsignal zu steuern, wobei das Softwaremodul angepasst ist, um ein Signal mit fallender Flanke an die Sicherheitseinheit (11) zu senden, wobei die fallende Flanke anzeigt, dass die KI-Verarbeitungseinheit (13) das zweite Signal als Reaktion auf das erste Signal vorbereitet hat und das nächste erste Signal empfangen kann,
wobei die KI-Verarbeitungseinheit (13), nachdem die fallende Flanke für eine vorbestimmte Zeitdauer erzeugt wurde, eine steigende Flanke des Herzschlagsignals erzeugt;
wobei die Sicherheitseinheit (11) nach dem Erfassen der von dem Softwaremodul empfangenen fallenden Flanke das nächste erste Signal an die KI-Verarbeitungseinheit (13) sendet und das vorherige zweite Signal liest; und
Bestimmen, durch die Sicherheitseinheit (11), einer Zeitspanne zwischen der fallenden und der steigenden Flanke des Herzschlagsignals um zu überprüfen, ob ein Takt der KI-Verarbeitungseinheit (13) korrekt ist.

3. System (1) zur Sicherheitsüberwachung einer Verarbeitungseinheit (13) mit künstlicher Intelligenz (KI) zum gleichzeitigen Ausführen einer Vielzahl von Aufgaben und zum gleichzeitigen Überwachen einer Vielzahl von Aufgaben, wobei das System umfasst:
eine Sicherheitseinheit (11) zum Senden eines ersten Signals an die KI-Verarbeitungseinheit (13);
wobei die KI-Verarbeitungseinheit (13) angepasst ist, um ein zweites Signal in Reaktion auf das erste Signal zu bestimmen, wobei das zweite Signal eine Antwort auf die Frage darstellt, und um an die Sicherheitseinheit (11) das zweite Signal und ein Herzschlagsignal der KI-Verarbeitungseinheit (13) zu übertragen, wobei das Herzschlagsignal ein periodisches Signal darstellt, das den normalen Betrieb der KI-Verarbeitungseinheit (13) anzeigt;
wobei die Frage eine Aufgabenkennung, Task_id, umfasst, die einer Aufgabe der KI-Verarbeitungseinheit (13) aus der Vielzahl von Aufgaben entspricht, die überwacht werden muss, und die Antwort die Beantwortung der Frage durch die der Aufgabe der KI-Verarbeitungseinheit (13) entsprechende Aufgabenkennung und die Anzahl der Übertragungen, live_count, des zweiten Signals als Antwort auf das erste Signal bei Wiederholung der Verfahrensschritte umfasst;
wobei die Sicherheitseinheit (11) dazu angepasst ist, zu bestimmen, ob das zweite Signal korrekt ist; wobei die KI-Verarbeitungseinheit (13) ferner ein Softwaremodul in der KI-Verarbeitungseinheit (13) zum Speichern des ersten Signals in einem Fragespeicherbereich der KI-Verarbeitungseinheit (13) und zum Lesen des zweiten Signals umfasst, wobei das zweite Signal in einem Antwortspeicherbereich der KI-Verarbeitungseinheit (13) gespeichert wird, und zum Senden des zweiten Signals an die Sicherheitseinheit (11)
wobei die Sicherheitseinheit (11) ferner dazu angepasst ist, zu bestimmen, ob das Herzschlagsignal korrekt ist, umfassend das Prüfen, dass eine Zeitperiode des Herzschlags einem vorbestimmten Wert entspricht, und weiter das Prüfen, dass eine Sequenz des ersten und
zweiten Signals einer vorbestimmten Zeitsequenz folgt;
wobei geprüft wird, dass Task_id der zu überwachenden Aufgabe entspricht, was das Lesen der Frage aus dem Fragespeicherbereich und das Schreiben der Antwort in den Antwortspeicherbereich umfasst;
das System ferner eine Stromversorgung (12) zur Versorgung der KI-Verarbeitungseinheit (13) umfasst, wobei die Sicherheitseinheit (11) ferner angepasst ist, ein Signal zum Abschalten der KI-Verarbeitungseinheit (13) entweder durch Zurücksetzen der KI-Verarbeitungseinheit (13) oder durch Abschalten der Stromversorgung (12) zu senden.

## Revendications

1. Méthode de contrôle de la sécurité d'une unité de traitement d'intelligence artificielle IA (13) pour l'exécution simultanée de plusieurs tâches et le contrôle simultané de plusieurs tâches, comprenant les étapes suivantes :
la fourniture d'une unité de sécurité (11) pour envoyer un premier signal représentant une question à l'unité de traitement IA (13) et
la détermination, par l'unité de traitement IA (13), d'un second signal en réponse au premier signal, le second signal représentant une réponse à la question ;
la transmission, par l'unité de traitement IA (13) à l'unité de sécurité (11), du second signal et d'un signal de battement de coeur de l'unité de traitement IA (13), le signal de battement de coeur représentant un signal périodique indiquant le fonctionnement normal de l'unité de traitement IA (13) ;
la question comprenant un identifiant de tâche, Task_id, correspondant à une tâche de l'unité de traitement IA (13) parmi la pluralité de tâches à surveiller et la réponse comprend la correspondance de l'identifiant de tâche à la tâche de l'unité de traitement IA (13) répondant à la question et le nombre de fois, live_count, où le second signal est transmis en réponse au premier signal lorsque les étapes de la méthode sont répétées ; et
la détermination, par l'unité de sécurité (11), si le second signal est correct, dans lequel la détermination, par l'unité de traitement IA (13), d'un second signal comprend : la fourniture d'un module logiciel dans l'unité de traitement IA (13) pour stocker le premier signal dans une zone de stockage de questions de l'unité de traitement IA (13) et la lecture du second signal, le second signal étant stocké dans une zone de stockage de réponses de l'unité de traitement IA (13), et pour la transmission du second signal à l'unité de sécurité (11), et
la détermination ultérieure, par l'unité de sécurité (11), si le signal de battement de coeur est correct, ce qui comprend vérifier qu'une période de temps du battement de coeur correspond à une valeur prédéterminée et la vérification ultérieure qu'une séquence des premier et second signaux suit une séquence temporelle prédéterminée ;
dans lequel il est vérifié que Task_id correspond à ladite tâche qui doit être surveillée, ce qui comprend la lecture de la question provenant de la zone de stockage des questions et l'écriture de la réponse dans la zone de stockage des réponses ;
dans lequel, si le second signal ou le signal de battement de coeur est incorrect, la méthode comprend en outre l'étape consistant à la transmission, par l'unité de sécurité (11), d'un signal d'arrêt de l'unité de traitement IA (13), soit en réinitialisant l'unité de traitement IA (13), soit en coupant une alimentation électrique (12) de l'unité de traitement IA (13).

2. Méthode selon l'une quelconque des revendications précédentes, dans lequel l'étape consistant à la détermination, par l'unité de sécurité (11), si le signal de battement de coeur est correct, comprend en outre les étapes suivantes :
la fourniture d'un module logiciel de l'unité de traitement IA (13) pour contrôler le signal de battement de coeur, le module logiciel étant adapté pour envoyer un signal de front descendant à l'unité de sécurité (11), le front descendant indiquant que l'unité de traitement IA (13) a préparé le second signal en réponse au premier signal et qu'elle peut recevoir le premier signal suivant,
l'unité de traitement IA (13) générant un front montant du signal de battement de coeur après que le front descendant a été généré pendant une période de temps prédéterminée ;
dans lequel, après avoir détecté le front descendant reçu du module logiciel, l'unité de sécurité (11) envoie le premier signal suivant à l'unité de traitement IA (13) et lit le second signal précédent ; et
la détermination, par l'unité de sécurité (11), d'une période de temps entre le front descendant et le front montant du signal de battement de coeur pour vérifier qu'une horloge de l'unité de traitement IA (13) est correcte.

3. Système (1) de surveillance de la sécurité d'une unité de traitement d'intelligence artificielle IA (13) pour l'exécution simultanée de plusieurs tâches et le contrôle simultané de plusieurs tâches, le système comprenant :
une unité de sécurité (11) pour envoyer un premier signal à l'unité de traitement IA (13)
l'adaptation de l'unité de traitement IA (13) pour déterminer un second signal en réponse au premier signal, le second signal représentant une réponse à la question, et pour transmettre à l'unité de sécurité (11) le second signal et un signal de battement de coeur de l'unité de traitement IA (13), le signal de battement de coeur représentant un signal périodique indiquant un fonctionnement normal de l'unité de traitement IA (13)
la question comprenant un identifiant de tâche, Task_id, correspondant à une tâche de l'unité de traitement IA (13) parmi la pluralité de tâches à surveiller et la réponse comprend la correspondance de l'identifiant de tâche à la tâche de l'unité de traitement IA (13) répondant à la question et le nombre de fois, live_count, où le second signal est transmis en réponse au premier signal lorsque les étapes de la méthode sont répétées ;
l'unité de sécurité (11) étant adaptée pour déterminer si le second signal est correct ;
l'unité de traitement IA (13) comprenant en outre un module logiciel dans l'unité de traitement IA (13) pour stocker le premier signal dans une zone de stockage de questions de l'unité de traitement IA (13) et la lecture du second signal, le second signal étant stocké dans une zone de stockage de réponses de l'unité de traitement IA (13), et pour envoyer le second signal à l'unité de sécurité (11),
l'unité de sécurité (11) étant en outre adaptée pour déterminer si le signal de battement de coeur est correct, ce qui comprend vérifier qu'une période de temps du battement de coeur correspond à une valeur prédéterminée et vérifier en outre qu'une séquence des premier et second signaux suit une séquence de temps prédéterminée ;
dans lequel il est vérifié que Task_id correspond à ladite tâche qui doit être surveillée, ce qui comprend la lecture de la question provenant de la zone de stockage des questions et l'écriture de la réponse dans la zone de stockage des réponses ;
le système comprenant en outre une alimentation électrique (12) pour alimenter l'unité de traitement IA (13), l'unité de sécurité (11) étant en outre adaptée pour envoyer un signal d'arrêt de l'unité de traitement IA (13), soit en réinitialisant l'unité de traitement IA (13), soit en coupant l'alimentation électrique (12).
